# EUROPEAN PATENT APPLICATION

(11) **EP 2 840 471 A1**
(43) Date of publication of application: **25.02.2015**
(21) Application number: 12874687.2
(22) Date of filing: 10.07.2012
(51) Int. Cl.: G06F 3/048

(54) **METHOD, DEVICE, AND ELECTRONIC TERMINAL FOR UNLOCKING**

(30) Priority: 17.04.2012 CN 201210112143
(71) Applicant: ZTE Corporation, Shenzhen, Guangdong 518057 (CN)
(72) Inventor: WANG, Weili, Shenzhen Guangdong 518057 (CN)
(74) Representative: Gevers Patents
(86) International application number: PCT/CN2012/078433
(87) International publication number: WO 2013/155798

(57) **Abstract**

A method, device and electronic terminal for unlocking are disclosed. The method is applicable in the electronic terminal. The electronic terminal comprises a touch display unit and receives a touch input operation of a user via the touch display unit. When the electronic terminal is in a user interface lock state, an operation that an operating body made on the touch display unit is detected; a response is made to the operation, a sliding track is formed on the touch display unit, and the time for forming the sliding track is recorded; the distance of the sliding track is calculated; the velocity for forming the sliding track is calculated on the basis of the distance and of the time; whether or not the velocity is greater than or equal to a predetermined velocity is determined; and, when the velocity is greater than or equal to the predetermined velocity, the user interface lock state is deactivated. The disclosure greatly reduces the technical complexity of unlocking by eliminating the need to set a predetermined track and a predetermined target on an unlocking interface.

## Description

### TECHNICAL FIELD

The disclosure relates to the field of computer technology, and in particular to a method, device and electronic terminal for unlocking.

### BACKGROUND

An increasing number of users are beginning to use electronic devices, particularly e.g. handheld electronic terminals such as mobile phones and tablet PCs, as they become more and more popular. Such an electronic terminal, when put into a pocket or not in use over a long period of time, may consume a quite amount of power and is prone to mis-operation, for instance, a dialing key or another key may be touched accidentally, resulting in inconvenience to a user.

In order to resolve the above mentioned technical problem, an electronic device is designed with a lock screen function, therefore it needs to be unlocked for use. Unlocking methods are demonstrating an increasingly diversifying trend over the recent years: for the first mobile phone equipped with physical keys, unlocking is achieved through key combination; by the time that a touch screen mobile phone comes into application, multiple types of unlocking methods have gradually emerged, such as performing a touch action according to a fixed track, moving an unlocking element towards the target area or filling up a blank area, etc.; at the same time, unlocking a mobile phone based on human-body characteristics, such as performing identification using characteristics such as human face, fingerprint, and voice, etc., is also gradually becoming a prior art of the public domain.

Examples may include unlocking by dragging an unlock icon according to a predetermined track or established target on a touch screen or using an unlock image according to a predetermined display path, etc. The determination method for unlocking is, corresponding to a predetermined gesture, detecting a touch that associates the movement of an image moving on the touch screen with a predefined path on the touch screen.

The unlocking method in the prior art, although equipping the electronic device with the lock screen function, have to rely on a predetermined path or gesture as the basis for unlocking determination, where the setting of a track or target on the unlock interface is complicated, the unlocking operation is awkward, and user experience is poor.

### SUMMARY

The disclosure provides a method, device and electronic terminal for unlocking, which is for resolving the issue of complexity in setting a predetermined path and predetermined gesture or target on an unlock interface that exists in the prior art.

The disclosure provides an unlocking method on one hand, which is applicable in an electronic terminal. The electronic terminal includes a touch display unit and receives a touch input operation of a user via the touch display unit. The method includes when the electronic terminal is in a user interface lock state, detecting an operation that an operating body made on the touch display unit; responding to the operation, forming a sliding track on the touch display unit, and recording the time for forming the sliding track; calculating the distance of the sliding track; calculating the velocity for forming the sliding track on the basis of the distance and of the time; determining whether or not the velocity is greater than or equal to a predetermined velocity; and, when the velocity is greater than or equal to the predetermined velocity, deactivating the user interface lock state.

Preferably, forming a sliding track on the touch display unit may be forming a continuous line on the touch display unit, wherein the continuous line has a starting position and an ending position.

Preferably, the electronic terminal may include a timing unit; and recording the time for forming the sliding track may be that the timing unit starts timing at the starting position and stops timing at the ending position.

Preferably, the method may also include when the velocity is less than the predetermined velocity, resetting the timing unit, clearing the sliding track and holding the user interface lock state.

Preferably, calculating the distance of the sliding track may include obtaining the position information of M touch points along the sliding track, wherein M is greater than or equal to 2 and is an integer, and the position information of the M touch points includes the starting position and the ending position; based on the position information of the M touch points, calculating respectively the sub-distances between any two adjacent touch points among the M touch points to determine M-1 sub-distances; based on the M-1 sub-distances, determining the distance of the sliding track.

Preferably, obtaining the position information of M touch points along the sliding track may be when forming a sliding track on the touch display unit, taking samples of the sliding track to obtain the position information of M touch points; or, when calculating the distance of the sliding track, taking samples of the sliding track to obtain the position information of M touch points.

The disclosure provides an unlocking device on the other hand, which is applicable in an electronic terminal. The electronic terminal includes a touch display unit that is configured to receive a touch input operation of a user. The device includes: a detecting unit, which is configured to, when the electronic terminal is in a user interface lock state, detect an operation that an operating body made on the touch display unit; a responding unit, which is configured to respond to the operation, form a sliding track on the touch display unit, and record the time for forming the sliding track; a first calculation unit, which is configured to calculate the distance of the sliding track; a second calculation unit, which is configured to calculate the velocity for forming the sliding track on the basis of the distance and of the time; a determination unit, which is configured to determine whether or not the velocity is greater than or equal to a predetermined velocity; a deactivating unit, which is configured to deactivate the user interface lock state when the velocity is greater than or equal to the predetermined velocity.

Preferably, the responding unit specifically includes a track forming unit, which is configured to form a continuous line on the touch display unit that has a starting position and an ending position.

Preferably, the responding unit may also include a timing unit, which is configured to start timing at the starting position and stop timing at the ending position.

Preferably, when the velocity is less than the predetermined velocity, the device may also include a control unit, which is configured to control resetting the timing unit, clear the sliding track and hold the user interface lock state.

Preferably, the first calculation unit is also configured to obtain the position information of M touch points along the sliding track, wherein M is greater than or equal to 2 and is an integer, and the position information of the M touch points includes the starting position and the ending position; which is also configured to calculate respectively the sub-distances between any two adjacent touch points among the M touch points based on the position information of the M touch points to determine M-1 sub-distances and determine the distance of the sliding track based on the M-1 sub-distances.

Preferably, the first calculation unit is also configured to, when the responding unit responds to form a sliding track on the touch display unit, take samples of the sliding track to obtain the position information of the M touch points; or, the first calculation unit is also set to, when calculating the distance of the sliding track, take samples of the sliding track to obtain the position information of the M touch points.

The disclosure further provides an electronic terminal that includes the said unlocking device.

The disclosure provides the following advantageous effects:
An embodiment of the disclosure utilizes the sliding distance and sliding time of a user on the touch display unit to calculate the sliding velocity and can realize unlocking when the sliding velocity is greater than or equal to a predetermined unlocking determination velocity. Therefore, by simply clicking the touch display unit in the user interface lock state, it is possible to slide along any track without being limited by any target point. For this reason, technical complexity is greatly reduced, operation becomes more flexible and user experience is improved, because no predetermined track or predetermined target needs to be set on the unlocking interface. At the same-time, accidental unlocking can be prevented effectively, because the lock state of the user interface can not be deactivated until whether or not the sliding velocity has reached the predetermined velocity value is determined.

Furthermore, in an embodiment of the disclosure, when the sliding velocity has not reached the predetermined velocity, the timing unit is reset, the sliding track is cleared, and the user interface lock state is held. Therefore, the next time the user unlocks, the timing unit can start counting from zero, reform a sliding track, and re-calculate the sliding velocity.

### BRIEF DESCRIPTION OF THE DRAWINGS

Figure 1 is a flow chart of the unlocking method in an embodiment of the disclosure;
Figure 2 is a structural diagram of calculation of the sliding velocity in an embodiment of the disclosure; and
Figure 3 is a functional block diagram of an unlocking device in an embodiment of the disclosure.

### DETAILED DESCRIPTION

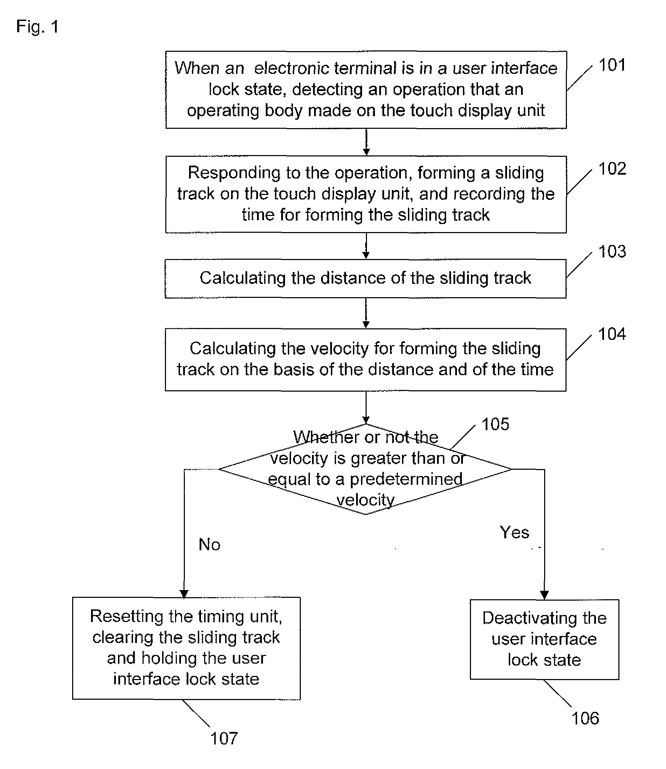

An unlocking method is provided in an embodiment of the disclosure, which is applicable in an electronic terminal. The electronic terminal includes a touch display unit and the touch display unit can receive a touch input operation of a user. The electronic terminal is e.g. a mobile phone, a tablet PC or another handheld terminal, etc. Please refer to Figure 1, which is a flow chart of the unlocking method in this embodiment.

As shown in Figure 1, the method includes:
Step 101: when the electronic terminal is in a user interface lock state, detecting an operation that an operating body made on the touch display unit;
Step 102: responding to the operation, forming a sliding track on the touch display unit, and recording the time for forming the sliding track;
Step 103: calculating the distance of the sliding track;
Step 104: calculating the velocity for forming the sliding track on the basis of the distance and of the time;
Step 105: determining whether or not the velocity is greater than or equal to a predetermined velocity; and
Step 106: when the velocity is greater than or equal to the predetermined velocity, deactivating the user interface lock state.

In Step 101, the electronic terminal is also in a user interface lock state; to deactivate the user interface lock state at this time, the user can use an operating body, such as a finger or a touch pen, to operate on the touch display unit, for example, the user can use a finger to slide on the touch display unit; at this time, responding to the slide, a sliding track of any shape is formed on the touch display unit; the sliding track can be displayed on the touch display unit as a straight line or is not displayed on the touch display unit; the sliding track is a continuous line and has a starting position and an ending position. Furthermore, responding to the slide, when the starting position of the finger on the touch display unit is detected, timing starts, for example, timing is performed using a timer, wherein the starting position on the touch display unit may be any position on the touch display unit, i.e. the starting position may be a touch point generated with a click on any position on the touch display unit.

Then, when the ending position of the finger on the touch display unit is detected, timing stops. Whether or not an ending position exists can be detected to determine whether or not the user has stopped this operation; specifically, e.g. whether or not the finger has left the touch display unit can be determined; if the finger has left the touch display unit, then the corresponding touch point when the finger leaves is simply the ending position. In another embodiment, whether or not the user has stopped sliding can also be detected; if the user has stopped sliding, then the corresponding touch point when the finger stops sliding is simply the ending position.

Furthermore, in another embodiment, when the finger slides on the touch display unit, the position information, such as coordinate values, of the touch point on the sliding track is also recorded; here either the position information of all touch points may be recorded or samples may be taken, such as only the position information of M touch points on the sliding track is recorded, wherein M is greater than or equal to 2 and is an integer, and the position information of the M touch points includes the starting position and the ending position. The specific sampling frequency is slightly different depending on different touch display units; in general, it is approximately between 50-200Hz; each point-in-time contains 3D data: (x, y, sw), wherein x and y are the abscissa and ordinate of the current touch point respectively, sw is a binary signal reflecting pressure and being used to mark if the current operating body is in a falling or lifting state.

Next, executing Step 103 to calculate the distance of the sliding track; in order for those skilled in the art to more clearly understand the disclosure, specific examples are provided below to offer specific descriptions, wherein e.g. a mobile phone is used as the electronic terminal.

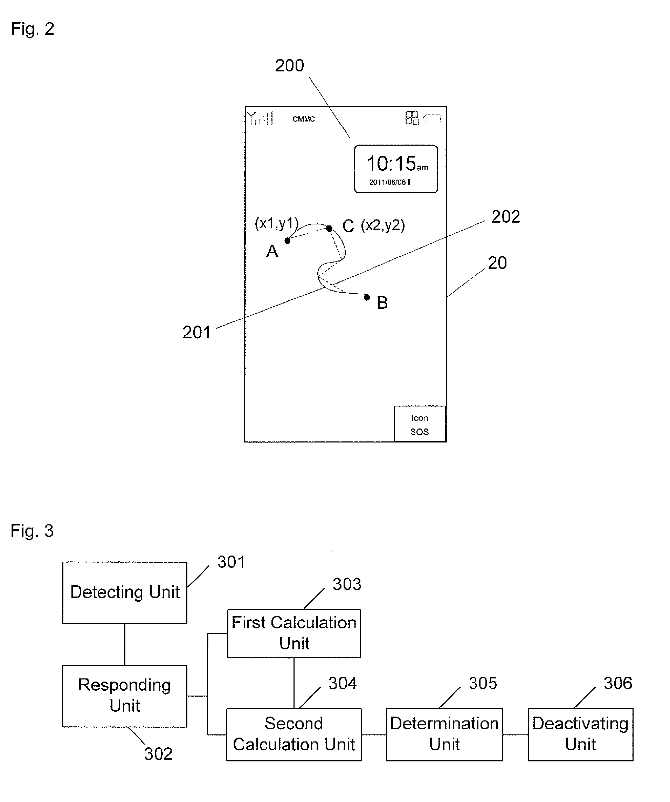

Please refer to Figure 2, for example, a mobile phone 20 includes a touch display unit 200, at which moment the mobile phone 20 is in a user interface lock state, a user slides on the touch display unit to form a sliding track 201; in this embodiment, a sliding track 201 is displayed on the touch display unit 200.

In this step, it is possible to first use the above mentioned method to obtain the position information of M touch points along the sliding track, then calculate respectively the sub-distances between any two adjacent touch points among the M touch points to determine M-1 sub-distances, and further use the M-1 sub-distances to obtain the distance of the sliding track, for example, obtaining the distance of the sliding track by simply accumulating all sub-distances.

For example, please refer to Figure 2, the sliding track 200 are taken samples to obtain the position information of touch point A, touch point B and touch point C, wherein the touch point A corresponds to the starting position of sliding track 200, the touch point B corresponds to the ending position of sliding track 200, the position information of touch point A is (x1, y1), the position information of touch point C is (x2, y2), then a formula D1=sqrt [(x2-x1)^2 + (y2-y1)^2] is used to calculate the straight-line distance D1 between the touch point A and the touch point C; likewise, the straight-line distance D2 between touch point C and touch point B is calculated, then the straight-line distance D1 is added with the straight-line distance D2, and finally the path length of sliding track 200, i.e. distance 202, is determined. Therefore, the greater the number of touch points sampled on the sliding track is, the more accurate the sliding distance calculated is.

In this embodiment, Step 103 may be performed either at the same time as Step 102 or after Step 102; when it is performed after Step 102, sampling can also be performed when it is necessary to calculate the distance of the sliding track, i.e. being performed after Step 102.

In this embodiment, the distance of the sliding track is determined by taking samples of the sliding track, obtaining the position information of multiple touch points, calculating the distances between any two adjacent touch points, and then accumulating these distances. In other embodiments, those skilled in the art can also calculate the distance of the sliding track using other methods, such as counting pixel points; the distance of the sliding track can be simply determined by counting pixel points, because there is a pixel point array on the touch display unit.

Then, Step 104 is executed, i.e. the velocity for forming the sliding track is calculated based on the distance and time of the sliding track, i.e. the sliding velocity of the finger on the touch display unit.

Then Step 105 is executed to determine whether or not the sliding velocity is greater than or equal to the predetermined velocity, which can be set by the user according to actual situation, thus preventing accidental operation.

When the result of determination in Step 105 is positive, then Step 106 is executed, i.e. the user interface lock state is deactivated.

In a further embodiment, when the result of determination in Step 105 is negative, Step 107 is executed, i.e. the timing unit is reset, the sliding track is cleared and the user interface lock state is held to make it easy for unlocking the next time.

In summary of the above, in embodiments of the disclosure, the user can slide freely by clicking any position on the touch display unit, without any limitation by either the position or direction. Accordingly, technical complexity is reduced, user operation becomes convenient, and user experience is improved.

Another embodiment of the disclosure also provides an unlocking device, which is e.g. used for realizing the unlocking method in the above embodiment. Please refer to Figure 3, which is a functional block diagram of the unlocking device in this embodiment.

As show in Figure 3, the device includes: a detecting unit 301, which is for detecting operation of the operating body on the touch display unit when the electronic terminal is in the user interface lock state; a responding unit 302, which is for responding to the operation, forming a sliding track on the touch display unit, and recording the time for forming the sliding track; a first calculation unit 303, which is for calculating the distance of the sliding track; a second calculation unit 304, which is for calculating the velocity for forming the sliding track on the basis of the distance and of the time; a determination unit 305, which is for determining whether or not the velocity is greater than or equal to the predetermined velocity; a deactivating unit 306, which is for deactivating the user interface lock state when the velocity is greater than or equal to the predetermined velocity.

The responding unit 302 specifically includes a track forming unit, which is for forming a continuous line on the touch display unit that has a starting position and an ending position.

Furthermore, the responding unit also includes a timing unit, which is for starting timing at the starting position and stopping timing at the ending position.

In another embodiment, when the velocity is less than the predetermined velocity, the device also includes a control unit, which is for controlling resetting the timing unit, clearing the sliding track and holding the user interface lock state.

In an embodiment, the first calculation unit 303 is also for obtaining the position information of M touch points along the sliding track, wherein M is greater than or equal to 2 and is an integer, and the position information of the M touch points includes the starting position and the ending position; the first calculation unit 303 is also for calculating respectively the sub-distances between any two adjacent touch points among the M touch points based on the position information of the M touch points to determine M-1 sub-distances and determining the distance of the sliding track based on the M-1 sub-distances.

Furthermore, the first calculation unit 303 is also for taking samples of the sliding track and obtaining the position information of the M touch points when the responding unit 302 forms the sliding track on the touch display unit; or
the first calculation unit 303 is also for taking samples of the sliding track and obtaining the position information of the M touch points when calculating the distance of the sliding track.

Various modifications and variations to the unlocking method in the above first and second embodiments are identically applicable to the unlocking device in this embodiment. With the above detailed descriptions of the unlocking method, those skilled in the art can clearly understand the method for implementing the unlocking device in this embodiment. Therefore, for the conciseness of this specification, they are no longer elaborated here.

In another embodiment of this disclosure,-an electronic terminal including the above unlocking device is also provided, which has a touch display unit, and the electronic terminal is e.g. a mobile phone, a tablet PC, a notebook PC or a smart TV.

Those skilled in the art should know that any embodiment of the disclosure can be provided as a method, a system or a computer program product. Therefore, the disclosure can adopt the form of a complete hardware embodiment, complete software embodiment or software-hardware combination embodiment. Also, the disclosure can adopt the form of a computer program product implemented on one or more computer-usable storage media (including but not limited to disk storage and optical storage, etc.) containing computer-usable program codes.

The disclosure is described according to the flowcharts and/or block diagrams of the method, equipment (system) and computer program product in the embodiments of the disclosure. It should be construed as each process and/or block in any flowchart and/or block diagram and any combination of processes and/or blocks in any flowchart and/or block diagram can be realized by computer program command(s). These computer program commands can be provided to the processor of a general-purpose computer, special-purpose computer, embedded processor or another programmable data processing equipment to create a machine to allow the commands executed via the processor of such computer or another programmable data processing equipment to create a device used for realizing the function(s) specified in one or more processes in the flowchart and/or one or more blocks in the block diagram.

These computer program commands can also be stored inside a computer-readable storage that can guide the computer or another programmable data processing equipment to operate in a particular manner to allow the commands stored inside the computer-readable storage to create a manufactured product that includes a command device, which realizes the function(s) specified in one or more processes in the flowchart and/or one or more blocks in the block diagram.

These computer program commands can also be loaded onto the computer or another programmable data processing equipment to allow a series of operating steps to be executed on the computer or another programmable equipment to generate processing realized by the computer so that the commands executed on the computer or another programmable equipment provide steps used for realizing the function(s) specified in one or more processes in the flowchart and/or one or more blocks in the block diagram.

An embodiment of the disclosure utilizes the sliding distance and sliding time of a user on the touch display unit to calculate the sliding velocity and can unlock when the sliding velocity is greater than or equal to a predetermined unlocking determination velocity. Therefore, by simply clicking the touch display unit in the user interface lock state, it is possible to slide along any track without being limited by any target point. For this reason, technical complexity is greatly reduced, operation becomes more flexible and user experience is improved, because no predetermined track or predetermined target needs to be set on the unlocking interface. At the same time, accidental unlocking can be prevented effectively, because the lock state of the user interface can not be deactivated until whether or not the sliding velocity has reached the predetermined velocity value is determined.

Furthermore, in an embodiment of the disclosure, when the sliding velocity has not reached the predetermined velocity, the timing unit is reset, the sliding track is cleared, and the user interface lock state is held. Therefore, the next time the user unlocks, the timing unit can start counting from zero, reform a sliding track, and re-calculate the sliding velocity.

Obviously, those skilled in the art can make various modifications and variations to the disclosure without departing from the spirit and scope of the disclosure. Thus, if these modifications and variations of the disclosure fall within the scope of the claims of the disclosure and equivalent technologies thereof, the disclosure is also intended to include these modifications and variations.

## Claims

1. A method for unlocking, which is applicable in an electronic terminal that comprises a touch display unit and receives a touch input operation of a user via the touch display unit, comprising:
when the electronic terminal is in a user interface lock state, detecting an operation that an operating body made on the touch display unit;
responding to the operation, forming a sliding track on the touch display unit, and recording time for forming the sliding track;
calculating a distance of the sliding track;
calculating a velocity for forming the sliding track on the basis of the distance and of the time;
determining whether or not the velocity is greater than or equal to a predetermined velocity; and
when the velocity is greater than or equal to the predetermined velocity, deactivating the user interface lock state.

2. The method according to claim 1, wherein forming the sliding track on the touch display unit is forming on the touch display unit a continuous line that has a starting position and an ending position.

3. The method according to claim 2, wherein the electronic terminal also comprises a timing unit; and recording the time for forming the sliding track is that the timing unit starts timing at the starting position and stops timing at the ending position.

4. The method according to claim 3, further comprising:
when the velocity is less than the predetermined velocity, resetting the timing unit, clearing the sliding track and holding the user interface lock state.

5. The method according to claim 2, wherein calculating the distance of the sliding track comprises:
obtaining position information of M touch points along the sliding track, wherein M is greater than or equal to 2 and is an integer, and the position information of the M touch points comprises the starting position and the ending position;
based on the position information of the M touch points, calculating respectively sub-distances between any two adjacent touch points among the M touch points to determine M-1 sub-distances; and
based on the M-1 sub-distances, determining the distance of the sliding track.

6. The method according to claim 5, wherein obtaining the position information of the M touch points along the sliding track is:
when forming the sliding track on the touch display unit, taking samples of the sliding track and obtaining the position information of the M touch points; or,
when calculating the distance of the sliding track, taking samples of the sliding track and obtaining the position information of the M touch points.

7. A device for unlocking, which is applicable in an electronic terminal that comprises a touch display unit which is configured to receive a touch input operation of a user, comprising:
a detecting unit, which is configured to detect an operation performed by an operating body on the touch display unit when the electronic terminal is in a user interface lock state;
a responding unit, which is configured to, responding to the operation, form a sliding track on the touch display unit, and record time for forming the sliding track;
a first calculation unit, which is configured to calculate a distance of the sliding track;
a second calculation unit, which is configured to calculate a velocity for forming the sliding track on the basis of the distance and of the time;
a determination unit, which is configured to determine whether or not the velocity is greater than or equal to a predetermined velocity; and
a deactivating unit, which is configured to, when the velocity is greater than or equal to the predetermined velocity, deactivate the user interface lock state.

8. The device according to claim 7, wherein the responding unit comprises a track forming unit, which is configured to form on the touch display unit a continuous line that has a starting position and an ending position.

9. The device according to claim 8, wherein the responding unit also comprises a timing unit, which is configured to start timing at the starting position and stop timing at the ending position.

10. The device according to claim 9, when the velocity is less than the predetermined velocity, further comprising a control unit which is configured to control resetting the timing unit, clear the sliding track and hold the user interface lock state.

11. The device according to claim 8, wherein the first calculation unit is also configured to obtain position information of M touch points along the sliding track, wherein M is greater than or equal to 2 and is an integer, and the position information of the M touch points comprises the starting position and the ending position; the first calculation unit is also configured to calculate respectively sub-distances between any two adjacent touch points among the M touch points based on the position information of the M touch points to determine Tut-1 sub-distances and determine the distance of the sliding track based on the M-1 sub-distances.

12. The device according to claim 11, wherein the first calculation unit is also configured to take samples of the sliding track and obtain the position information of the M touch points when the responding unit forms the sliding track on the touch display unit; or,
the first calculation unit is also configured to, when calculating the distance of the sliding track, take samples of the sliding track and obtain the position information of the M touch points.

13. An electronic terminal comprising the unlocking device according to any one of claims 7-12.
